# EUROPEAN PATENT SPECIFICATION

(11) **EP 4 059 739 B1**
(45) Date of publication and mention of the grant of the patent: **29.11.2023**
(21) Application number: 22160951.4
(22) Date of filing: 09.03.2022
(51) Int. Cl.: B60C 9/20, B60C 9/06

(54) **TIRE FOR KARTS**
REIFEN FÜR GOKARTS
PNEU POUR KARTS

(30) Priority: 17.03.2021 JP 2021043626
(43) Date of publication of application: 21.09.2022
(73) Proprietor: Sumitomo Rubber Industries, Ltd., Kobe-shi, Hyogo-ken 651-0072 (JP)
(72) Inventor: KANNO, Nobuhiro, Kobe-shi, Hyogo, 651-0072 (JP)
(74) Representative: Manitz Finsterwald Patent- und Rechtsanwaltspartnerschaft mbB

(56) References cited:
- EP-A1- 3 922 485
- JP-A- 2011 136 654

## Description

### BACKGROUND OF THE INVENTION

### Field of the Invention

The present invention relates to a tire for karts.

### Background Art

The performances of racing karts (hereinafter, karts) have been significantly improved in recent years. In association with this, tires to be mounted to the karts have also been required to have further improved performances. In order to meet this request, various studies have been conducted (for example, Japanese Laid-Open Patent Publication No. 2001-47810).

Each tire is required to exert high grip force in order to turn the kart at an increased speed. Studies to increase the ground-contact area of the tire have been conducted in order to increase the grip force. Studies to widen the ground-contact width of the tire have also been conducted in order to prevent a sideslip during turning.

Studies to configure a tread surface to have a flat contour have been conducted in order to increase the ground-contact area while widening the ground-contact width. The tire in which a flat contour is employed may experience a phenomenon called buckling in which a tread portion is deformed owing to centrifugal force exerted to the vehicle during turning, such that a part of the tread surface is recessed inward. In this case, the ground-contact area decreases, and thus the tire cannot exert sufficient grip force. The tire may also experience uneven wear since portions receiving high ground-contact pressure are locally present on a ground-contact surface.

A carcass having a radial structure is employed in a tire for passenger cars, whereas a carcass having a bias structure is employed in a tire for karts. A belt is provided between a tread and the carcass in the tire for passenger cars, whereas no belt is provided in the tire for karts. Further, the internal pressure of the tire for karts is lower than the internal pressure of the tire for passenger cars. The rigidity of a tread portion of the tire for karts is lower than that of the tire for passenger cars. Consequently, the tire for karts is more likely to experience buckling.

There is a chance that increase of the rigidity of the carcass leads to increase of the rigidity of the tread portion so that buckling can be prevented from occurring. In this case, however, the rigidities of side portions are also increased, and thus steering stability may decrease. Meanwhile, there is a chance that increase of the internal pressure of the tire leads to suppression of deformation of the tread portion so that buckling can be prevented from occurring. In this case, however, the outer surface of the tread portion is rounded, and thus the ground-contact area decreases, whereby the grip force may decrease.
JP 2011 136654 A discloses a tire for karts comprising the features according to the preamble of claim 1.
EP 3 922 485 A1 being published after the priority date of the present application discloses a tire comprising features according to a related technology.

### SUMMARY OF THE INVENTION

The present invention has been made in view of the above circumstances, and an object of the present invention is to provide a tire for karts that can achieve increase of the turning speed thereof.

A tire for karts according to one aspect of the present invention includes: a tread configured to come into contact with a road surface; a carcass having a bias structure and located radially inward of the tread; and a reinforcing layer located radially inward of the tread and stacked on a radially outer side of the carcass. A ground-contact surface obtained by bringing the tire into contact with a planar road surface with a maximum load from an actual vehicle being applied to the tire in a state where the tire is mounted to a normal rim, an internal pressure of the tire is adjusted to a normal internal pressure, and a camber angle of the tire is set to 0 degrees, is a reference ground-contact surface. A position, on an outer surface of the tread, that corresponds to an axially outer end of the reference ground-contact surface is a reference ground-contact end. Out of both ends of the tread, an end located on one side in an axial direction is a first end, and an end located on another side in the axial direction is a second end. The reinforcing layer is located between an equatorial plane and the first end of the tread. An inner end of the reinforcing layer is located axially inward of the reference ground-contact end. The reinforcing layer includes a large number of reinforcing cords aligned in a circumferential direction.

In the tire for karts, the carcass includes at least two carcass plies. Each carcass ply includes a large number of aligned carcass cords. An angle between each reinforcing cord and each carcass cord included in the carcass ply on which the reinforcing layer is stacked, is not larger than 10 degrees.

It is preferable that, in the tire for karts, a ratio of an axial distance from the equatorial plane to the inner end of the reinforcing layer to an axial distance from the equatorial plane to the first end of the tread, is not lower than 0.50 and not higher than 0.70.

It is preferable that, in the tire for karts, a ratio of an axial distance from the equatorial plane to an outer end of the reinforcing layer to the axial distance from the equatorial plane to the first end of the tread, is not lower than 0.85.

It is preferable that, in the tire for karts, an angle of the reinforcing cord with respect to the equatorial plane is larger than an angle of the carcass cord with respect to the equatorial plane.

It is preferable that, in the tire for karts, when the tire is mounted to a vehicle, the first end of the tread is located on an outer side in a width direction of the vehicle.

According to the present invention, a tire for karts that can achieve increase of the turning speed thereof is obtained.

### BRIEF DESCRIPTION OF THE DRAWINGS

FIG. 1 is a cross-sectional view of a part of a tire for karts according to an embodiment of the present invention;
FIG. 2 is an enlarged cross-sectional view showing a contour of a shoulder portion of the tire in FIG. 1;
FIG. 3 is an enlarged cross-sectional view showing a part of the tire in FIG. 1; and
FIG. 4 is a schematic view for explaining a configuration of a carcass and a reinforcing layer.

### DETAILED DESCRIPTION

Hereinafter, the present invention will be described in detail with appropriate reference to the drawings on the basis of a preferable embodiment.

A state where the tire is mounted to a normal rim, the internal pressure of the tire is adjusted to a normal internal pressure, and no load is applied to the tire, is referred to as a normal state.

Dimensions and angles of components of the tire are measured in the normal state, unless otherwise specified. If dimensions and angles of components in a meridian cross section of the tire cannot be measured in the state where the tire is mounted to the normal rim, the dimensions and angles are measured with the distance between left and right beads being made equal to the distance between the beads in the tire mounted to the normal rim, in a cross section of the tire obtained by cutting the tire along a plane including a rotational axis.

The normal rim means a rim that is defined by a standard on which the tire is based. The "standard rim" in the JATMA standard, the "Design Rim" in the TRA standard, and the "Measuring Rim" in the ETRTO standard, are normal rims.

The normal internal pressure means an internal pressure that is defined by a standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are normal internal pressures.

A normal load means a load that is defined by a standard on which the tire is based. The "maximum load capacity" in the JATMA standard, the "maximum value" recited in "TIRE LOAD LIMITS AT VARIOUS COLD INFLATION PRESSURES" in the TRA standard, and the "LOAD CAPACITY" in the ETRTO standard, are normal loads.

A tread portion of the tire is a portion of the tire that comes into contact with a road surface. A bead portion is a portion of the tire that is fitted to a rim. A side portion is a portion of the tire that extends on and between the tread portion and the bead portion. The tire includes, as portions thereof, a tread portion, a pair of bead portions, and a pair of side portions.

The number of cords that are included per a width of 5 cm of an element of the tire and that are inclusive of aligned cords, is represented as the density (unit: ends/5 cm) of cords included in the element. The density of the cords is obtained in a cross section, of the element, that is obtained by cutting the element at a plane perpendicular to the length direction of the cords.

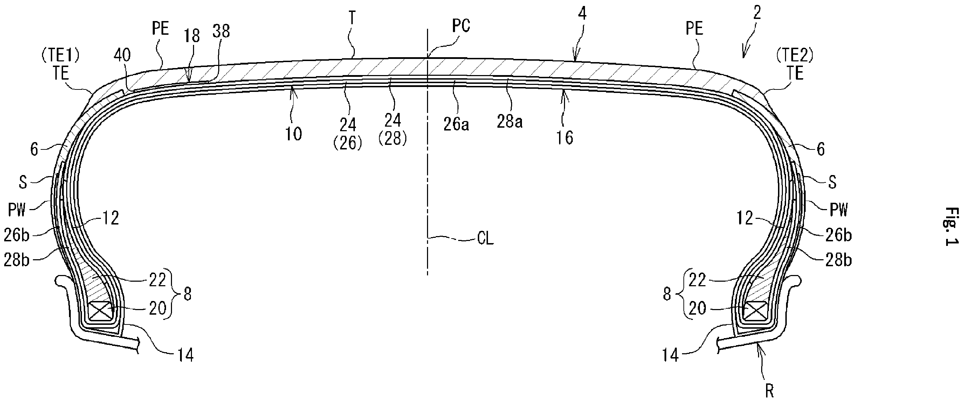

FIG. 1 shows an example of a tire 2 for karts (hereinafter, tire 2) according to an embodiment of the present invention. In FIG. 1, a part of a cross section (hereinafter, referred to also as meridian cross section) of the tire 2 along the plane including the rotational axis of the tire 2 is shown. In FIG. 1, the left-right direction is an axial direction of the tire 2, and the up-down direction is a radial direction of the tire 2. The direction perpendicular to the sheet surface of FIG. 1 is a circumferential direction of the tire 2. In FIG. 1, the alternate long and short dash line CL indicates an equatorial plane of the tire 2.

In FIG. 1, the tire 2 is mounted to a rim R. The rim R is a normal rim. The interior of the tire 2 is filled with air so that the internal pressure of the tire 2 is adjusted. The tire 2 mounted to the rim R is referred to also as a tire-rim assembly. A tire-rim assembly includes: a rim R and a tire 2 mounted to the rim R.

In FIG. 1, the position denoted by each of reference characters PW is an axially outer end of the tire 2. If decorations such as patterns or letters are present on the outer surface, the outer end PW is specified on the basis of a virtual outer surface obtained on the assumption that there is no decoration. The axial distance from one of the outer ends PW to the other outer end PW is the maximum width, i.e., a cross-sectional width (see JATMA or the like), of the tire 2. The outer ends PW are positions (hereinafter, maximum width positions) at which the tire 2 has the maximum width.

The tire 2 includes, as elements thereof, a tread 4, a pair of sidewalls 6, a pair of beads 8, a carcass 10, a pair of fillers 12, a pair of chafers 14, an inner liner 16, and a reinforcing layer 18.

The tread 4, at the outer surface thereof, comes into contact with a road surface. The outer surface of the tread 4 has a shape protruding radially outward. The tread 4 is formed from cross-linked rubber in consideration of wear resistance and grip force. In FIG. 1, the position indicated by the reference character PC is the intersection between the outer surface of the tread 4 and the equatorial plane. The intersection PC is the equator of the tire 2.

In FIG. 1, the position indicated by each of the reference characters PE is a position on the outer surface of the tread 4. The position PE corresponds to an axially outer end (hereinafter, referred to also as ground-contact end) of a ground-contact surface obtained when the tire 2 is brought into contact with a road surface.

The ground-contact surface for specifying the position PE is obtained by using, for example, a ground-contact surface shape measuring device (not shown). The ground-contact surface is obtained when, in this device, the tire 2 is brought into contact with a planar road surface with a maximum load from an actual vehicle being applied as a vertical load to the tire 2 in a state where the camber angle of the tire 2 in the normal state is set to 0 degrees. The ground-contact surface obtained in this manner is a reference ground-contact surface, and a position, on the outer surface of the tread 4, that corresponds to an axially outer end of the reference ground-contact surface is the aforementioned position PE. The position PE is a reference ground-contact end.

The maximum load from an actual vehicle means a load that is twice a maximum load per tire that is borne by tires mounted to an actual vehicle (a vehicle such as a racing kart to be used on an actual circuit) when the actual vehicle is placed on a horizontal road surface. The maximum load per tire is calculated in consideration of the centroid of the vehicle by using the total mass of the vehicle obtained on the assumption that one driver (mass=55 kg) gets on the vehicle.

In the tire 2, the ratio of the axial distance from the equatorial plane to each reference ground-contact end PE to the axial distance L1 (described later) from the equatorial plane to a corresponding first end TE1 of the tread 4, is not lower than 0.70 and not higher than 0.85.

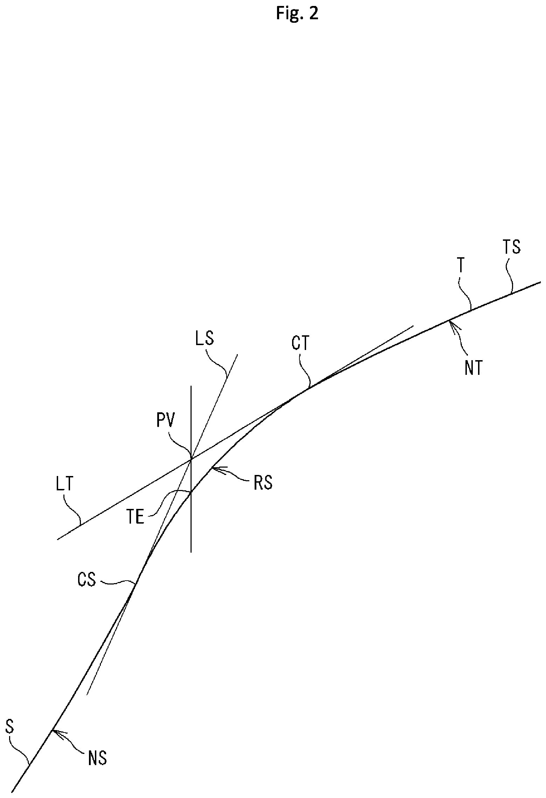

FIG. 2 shows a part of the tire 2 shown in FIG. 1. In FIG. 2, a contour of a shoulder portion of the tire 2 in the meridian cross section is shown. The contour shown in FIG. 2 is obtained by measuring the shape of the outer surface of the tire 2 in the normal state with use of a displacement sensor. In FIG. 2, the contour of the outer surface of the tire 2 in the normal state in the meridian cross section of the tire 2 is shown.

In the meridian cross section, the contour of the outer surface (hereinafter, tire outer surface TS) of the tire 2 is formed by connecting a plurality of contour lines which are straight lines or arcs. The contour lines which are straight lines or arcs are simply referred to as contour lines. The contour lines which are straight lines are referred to as straight contour lines, and contour lines which are arcs are referred to as curved contour lines.

The tire outer surface TS includes: a tread surface T; and a pair of side surfaces S contiguous to ends of the tread surface T. In the meridian cross section, the contour of the tread surface T includes a plurality of curved contour lines having different radii. In the tire 2, a curved contour line that has the smallest radius among the plurality of curved contour lines included in the contour of the tread surface T is located at each of end portions of the tread surface T and is contiguous to the corresponding side surface S. In the meridian cross section, the contour of the tire outer surface TS includes, at the end portion of the tread surface T, a curved-line portion that is the curved contour line contiguous to the side surface S and that is an arc having the smallest radius among the plurality of curved contour lines included in the contour of the tread surface T. In FIG. 2, the curved-line portion is indicated by the reference character RS.

In the contour of the tire outer surface TS, the curved-line portion RS is, at a contact point CT, in contact with a contour line (hereinafter, inner-side adjacent contour line NT) adjacent to the axially inner side of the curved-line portion RS. The curved-line portion RS is, at a contact point CS, in contact with a contour line (hereinafter, outer-side adjacent contour line NS) that is adjacent to the axially outer side of the curved-line portion RS and that forms a contour of the side surface S. The contour of the tire outer surface TS includes: the inner-side adjacent contour line NT located axially inward of the curved-line portion RS and in contact with the curved-line portion RS; and the outer-side adjacent contour line NS located axially outward of the curved-line portion RS and in contact with the curved-line portion RS.

In FIG. 2, the solid line LT is a tangent line, to the curved-line portion RS, that passes through the contact point CT between the inner-side adjacent contour line NT and the curved-line portion RS. The solid line LS is a tangent line, to the curved-line portion RS, that passes through the contact point CS between the outer-side adjacent contour line NS and the curved-line portion RS. The position indicated by the reference character PV is the intersection between the tangent line LT and the tangent line LS. In FIG. 2, the position indicated by the reference character TE is the intersection between the tread surface T and a straight line that extends in the radial direction and that passes through the intersection PV. The intersection TE is an end of the tread 4.

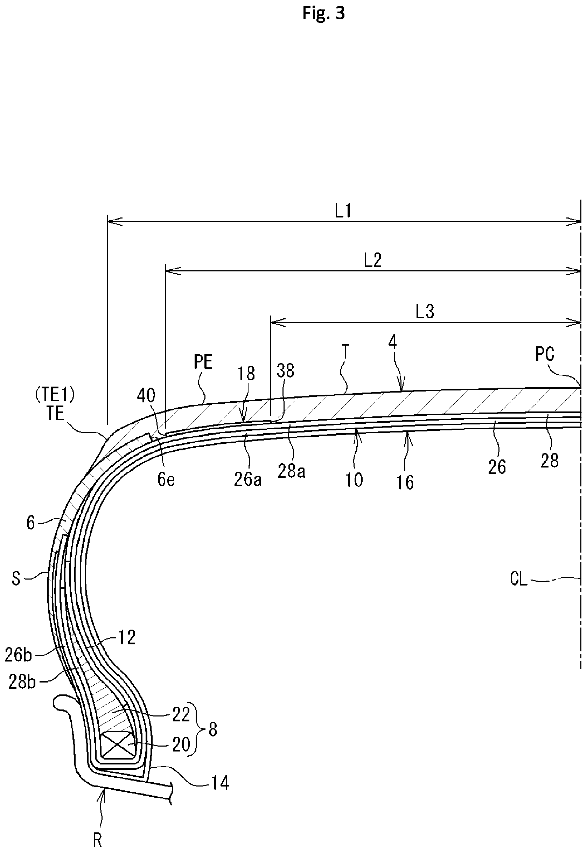

In the tire 2, out of both ends TE of the tread 4, an end TE of the tread 4 that is located on one side in the axial direction, i.e., the left side in the sheet surface of FIG. 1, is the first end TE1. Out of both ends TE of the tread 4, an end TE of the tread 4 that is located on another side in the axial direction, i.e., the right side in the sheet surface of FIG. 1, is a second end TE2. Of the cross section of the tire 2 shown in FIG. 1, a cross section on the first end TE1 side of the tread 4 is shown in FIG. 3.

Although not described in detail, the tread surface T of the tire 2 is formed to have a flat contour, in order to increase a ground-contact area while widening a ground-contact width.

Each sidewall 6 is contiguous to the corresponding end portion of the tread 4 and located radially inward of the tread 4. The sidewall 6 is located axially outward of the carcass 10. The sidewall 6 extends in the radial direction along the carcass 10. The sidewall 6 is formed from cross-linked rubber in consideration of cut resistance.

Each bead 8 is located radially inward of the corresponding sidewall 6. The bead 8 includes a core 20 and an apex 22. Although not shown, the core 20 includes a wire made of steel. The apex 22 is located radially outward of the core 20. The apex 22 is tapered radially outward. The apex 22 is formed from cross-linked rubber having high rigidity.

The carcass 10 is located radially inward of the tread 4. The carcass 10 is located axially inward of the sidewall 6. The carcass 10 extends on and between one of the beads 8 and the other bead 8. The carcass 10 has a bias structure. The carcass 10 includes at least two carcass plies 24.

The carcass 10 of the tire 2 is composed of two carcass plies 24. Out of the two carcass plies 24, the carcass ply 24 that is located on the inner side is a first ply 26, and the carcass ply 24 that is located on the outer side is a second ply 28.

The first ply 26 has: a first ply body 26a extending on and between one of the cores 20 and the other core 20; and a pair of first turned-up portions 26b contiguous to the first ply body 26a and turned up around the respective cores 20 from the inner side to the outer side in the axial direction. In the tire 2, an end of each first turned-up portion 26b is located radially outward of the corresponding maximum width position PW.

The second ply 28 has: a second ply body 28a extending on and between the one core 20 and the other core 20; and a pair of second turned-up portions 28b contiguous to the second ply body 28a and turned up around the respective cores 20 from the inner side to the outer side in the axial direction. In the tire 2, an end of each second turned-up portion 28b is located radially outward of the tip of the corresponding apex 22. The end of the second turned-up portion 28b is covered by the first turned-up portion 26b from the axially outer side.

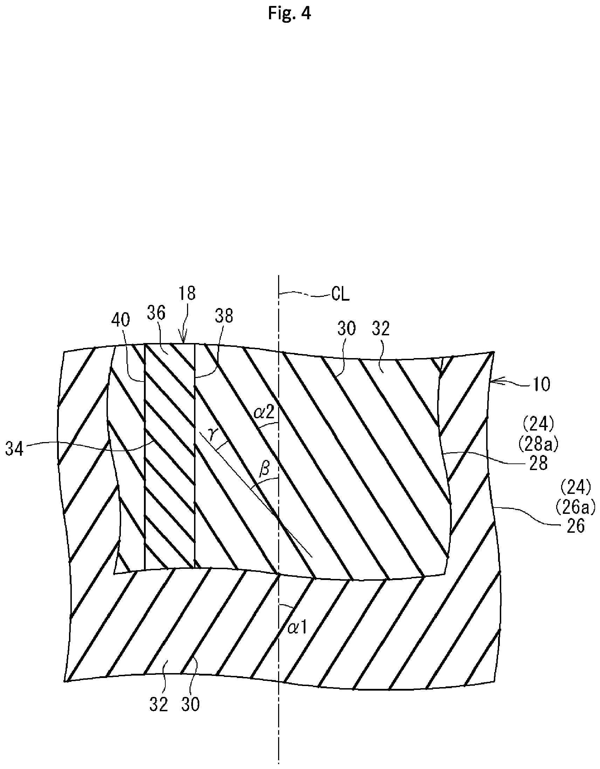

In FIG. 4, the configuration of the carcass 10 in the tire 2 is shown together with the configuration of the reinforcing layer 18 described later. In FIG. 4, the left-right direction is the axial direction of the tire 2, and the up-down direction is the circumferential direction of the tire 2.

In the tire 2, each of the first ply 26 and the second ply 28 includes a large number of aligned carcass cords 30. In FIG. 4, the carcass cords 30 are indicated by solid lines for convenience of description, and the carcass cords 30 are covered by topping rubber 32. Each of the first ply 26 and the second ply 28 is composed of: the large number of carcass cords 30; and the topping rubber 32 covering the carcass cords 30. In each of the first ply 26 and the second ply 28, the density of the carcass cords 30 is not less than 20 ends/5 cm and not more than 60 ends/5 cm.

In the tire 2, the carcass cords 30 are tilted with respect to the equatorial plane. As shown in FIG. 4, the orientation of the tilt of each carcass cord 30 included in the first ply 26 is opposite to the orientation of the tilt of each carcass cord 30 included in the second ply 28.

In FIG. 4, the angle denoted by the reference character α1 is the angle (hereinafter, tilt angle) of the carcass cord 30 included in the first ply 26 with respect to the equatorial plane. The tilt angle α1 of the said carcass cord 30 is not smaller than 15° and not larger than 45°. The angle denoted by the reference character α2 is the tilt angle of the carcass cord 30 included in the second ply 28. The tilt angle α2 of the said carcass cord 30 is not smaller than 15° and not larger than 45°. In the tire 2, the tilt angle α1 of the carcass cord 30 included in the first ply 26 and the tilt angle α2 of the carcass cord 30 included in the second ply 28 are set to be equal to each other.

In the tire 2, a cord formed from an organic fiber is used as the carcass cord 30. The organic fiber is exemplified by nylon fiber, rayon fiber, polyester fiber, and aramid fiber.

Each filler 12 is located axially inward of the corresponding bead 8. For example, as shown in FIG. 3, the filler 12 is located between the second ply body 28a and the apex 22. An outer end of the filler 12 is located between the end of the corresponding first turned-up portion 26b and the end of the corresponding second turned-up portion 28b, in the radial direction. An inner end of the filler 12 is located between the core 20 and the tip of the apex 22, in the radial direction. In the tire 2, the filler 12 is not an essential element. The filler 12 does not have to be provided.

Although not shown, the filler 12 is composed of a large number of aligned cords and topping rubber. Each cord is tilted with respect to the radial direction. The tilt angle of the cord is not smaller than 30° and not larger than 60°. The cord is formed from an organic fiber. The organic fiber is exemplified by nylon fiber, rayon fiber, polyester fiber, and aramid fiber.

Each chafer 14 is located radially inward of the corresponding bead 8. The chafer 14 is brought into contact with a rim (not shown). The chafer 14 of the tire 2 is composed of a fabric and rubber with which the fabric is impregnated.

The inner liner 16 is located inward of the carcass 10. The inner liner 16 forms the inner surface of the tire 2. The inner liner 16 maintains the internal pressure of the tire 2. The inner liner 16 is formed from cross-linked rubber.

The reinforcing layer 18 is located radially inward of the tread 4. The tread 4 covers the reinforcing layer. In the tire 2, no elements such as a belt including a belt cord extending so as to be tilted with respect to the equatorial plane and a band including a band cord spirally wound substantially along the circumferential direction, are provided between the tread 4 and the reinforcing layer 18. In other words, no other elements are provided between the tread 4 and the reinforcing layer 18. The tread 4 is stacked directly on the reinforcing layer 18.

The reinforcing layer 18 is stacked on the radially outer side of the carcass 10, specifically, the second ply body 28a. In the tire 2, no elements such as the belt and the band are provided between the carcass 10 and the reinforcing layer 18. In other words, no other elements are provided between the carcass 10 and the reinforcing layer 18. The reinforcing layer 18 is stacked directly on the second ply body 28a.

If, for example, the reinforcing layer 18 is provided between the first ply 26 and the second ply 28 or between the carcass 10 and the inner liner 16, the reinforcing layer 18 interferes with the carcass 10 during production of the tire 2 so that the carcass 10 may be distorted or wrinkled. In this case, the ground-contact pressure is locally increased or a ground-contact shape is distorted, and thus wear resistance and steering stability might be impaired. Meanwhile, in the tire 2, the reinforcing layer 18 is stacked on the radially outer side of the carcass 10 as described above. Consequently, in the tire 2, interference with the carcass 10 by the reinforcing layer 18 is inhibited, and thus the carcass 10 is prevented from being distorted or wrinkled during production of the tire 2. Therefore, in the tire 2, favorable wear resistance and steering stability are maintained. Moreover, since the reinforcing layer 18 is disposed at a position close to the tread surface T, the reinforcing layer 18 can effectively contribute to control of the rigidity of the tread surface T.

As shown in FIG. 4, the reinforcing layer 18 includes a large number of reinforcing cords 34 aligned in the circumferential direction. In FIG. 4, the reinforcing cords 34 are indicated by solid lines for convenience of description, and the reinforcing cords 34 are covered by topping rubber 36. The reinforcing layer 18 is composed of: the large number of reinforcing cords 34 aligned in the circumferential direction; and the topping rubber 36 covering the reinforcing cords 34. The density of the reinforcing cords 34 included in the reinforcing layer 18 is set to fall within a range of not less than 30 ends/5 cm and not more than 70 ends/5 cm.

In the tire 2, the density of the reinforcing cords 34 is equal to the density of the carcass cords 30. In the tire 2, the density of the reinforcing cords 34 may be higher than the density of the carcass cords 30, or the density of the reinforcing cords 34 may be lower than the density of the carcass cords 30.

In the tire 2, the material of each reinforcing cord 34 is not particularly limited. Any of cords that are generally used in the technical field of tires, is used as the reinforcing cord 34. The reinforcing cord 34 may be a steel cord. The reinforcing cord 34 may be a cord formed from an organic fiber. From the viewpoint of facilitating production of the tire 2, the reinforcing cord 34 is preferably a cord formed from an organic fiber. The organic fiber is exemplified by nylon fiber, rayon fiber, polyester fiber, and aramid fiber. As the organic fiber, nylon fiber or polyester fiber is preferable.

In the tire 2, the reinforcing cords 34 are disposed at intervals in the circumferential direction. One end of each reinforcing cord 34 is located at an inner end 38 of the reinforcing layer 18, and another end of the reinforcing cord 34 is located at an outer end 40 of the reinforcing layer 18. The reinforcing cord 34 extends on and between the inner end 38 and the outer end 40 of the reinforcing layer 18.

In the tire 2, the orientation of the tread 4 with respect to a kart (hereinafter, referred to also as vehicle) is specified. When the tire 2 is mounted to a vehicle, the first end TE1 of the tread 4 out of both ends TE of the tread 4 is disposed on the outer side in a width direction of the vehicle, and the second end TE2 of the tread 4 out of both ends TE of the tread 4 is disposed on the inner side in the width direction of the vehicle.

Centrifugal force is exerted to the vehicle during turning. In the tread of the tire located on an outer wheel side, distortion tends to concentrate in a portion at and around the reference ground-contact end PE on the first end TE1 side during turning.

Unlike in tires for passenger cars, the tread portion of the tire 2 does not include the elements such as the belt and the band. A higher turning speed leads to exertion of a larger force to the tread 4. As described above, the tread surface T of the tire 2 is formed to have a flat contour in order to increase the ground-contact area while widening the ground-contact width. In the tire 2, a phenomenon called buckling in which a part of the tread surface T is recessed inward might occur in the aforementioned portion at and around the reference ground-contact end PE.

However, in the tire 2, the reinforcing layer 18 is located between the equatorial plane and the first end TE1 of the tread 4, as shown in FIG. 1 or FIG. 3. The inner end 38 of the reinforcing layer 18 is located axially inward of the reference ground-contact end PE. Moreover, the tread 4 is stacked directly on the reinforcing layer 18. The reinforcing layer 18 includes the large number of reinforcing cords 34 aligned in the circumferential direction. The reinforcing layer 18 particularly effectively increases the rigidity of a portion, of the tread surface T, at and around the reference ground-contact end PE on the first end TE1 side of the tread 4. This portion is where buckling might occur. Consequently, in the tire 2, deformation of the portion, of the tread surface T, at and around the reference ground-contact end PE is suppressed even when the vehicle turns at high speed. In the tire 2, buckling is prevented from occurring even though the tread surface T is formed to have a flat contour.

As shown in FIG. 1, no reinforcing layer 18 is provided between the equatorial plane and the second end TE2 of the tread 4 in the tire 2. Between the inner end 38 of the reinforcing layer 18 and the sidewall 6 on the second end TE2 side of the tread 4, the tread 4 is stacked directly on the carcass 10, specifically, the second ply body 28a.

In the tire 2, the flexibility of the tread surface T is appropriately maintained between the inner end 38 of the reinforcing layer 18 and the second end TE2 of the tread 4. Consequently, in the same manner as in conventional tires, a sufficient ground-contact area is ensured between the inner end 38 of the reinforcing layer 18 and the second end TE2 of the tread 4. In the tire 2, buckling is also prevented from occurring, as described above. In the tire 2, the ground-contact area is increased as compared to the conventional tires in which no reinforcing layer 18 is provided. The increase of the ground-contact area contributes to improvement in grip force.

In the tire 2, the tread 4 sufficiently comes into contact with a road surface. Thus, the tire 2 is less likely to experience a sideslip and can exert high grip force during turning. Therefore, the tire 2 can achieve increase of the turning speed thereof.

Further, in the tire 2, the ground-contact pressure is prevented from being locally increased, and thus uneven wear is inhibited from occurring. Therefore, the tire 2 can also achieve improvement in wear resistance.

As shown in FIG. 3, the outer end 40 of the reinforcing layer 18 is located axially outward of the reference ground-contact end PE in the tire 2. The reference ground-contact end PE is located between the inner end 38 and the outer end 40 of the reinforcing layer 18, in the axial direction. Consequently, the reinforcing layer 18 more effectively increases the rigidity of the portion, of the tread surface T, at and around the reference ground-contact end PE on the first end TE1 side of the tread 4. Thus, buckling is effectively prevented from occurring in the tire 2. From this viewpoint, in the tire 2, the outer end 40 of the reinforcing layer 18 is preferably located axially outward of the reference ground-contact end PE.

As shown in FIG. 3, in the tire 2, the outer end 40 of the reinforcing layer 18 is located axially inward of an end 6e of the sidewall 6 on the first end TE1 side of the tread 4. In the tire 2, the outer end 40 of the reinforcing layer 18 may be located axially outward of the end 6e of the sidewall 6 on the first end TE1 side of the tread 4. In other words, the outer end 40 of the reinforcing layer 18 may be sandwiched between the sidewall 6 and the second ply body 28a. In this case, an overlapping length between the sidewall 6 and the reinforcing layer 18 is preferably not larger than 10 mm and more preferably not larger than 5 mm.

In FIG. 3, the length indicated by the double-headed arrow L1 is the axial distance from the equatorial plane to the first end TE1 of the tread 4. The length indicated by the double-headed arrow L2 is the axial distance between the equatorial plane to the outer end 40 of the reinforcing layer 18. The length indicated by the double-headed arrow L3 is the axial distance from the equatorial plane to the inner end 38 of the reinforcing layer 18.

In the tire 2, the ratio (L3/L1) of the axial distance L3 from the equatorial plane to the inner end 38 of the reinforcing layer 18 to the axial distance L1 from the equatorial plane to the first end TE1 of the tread 4, is preferably not lower than 0.50 and not higher than 0.70.

If the ratio (L3/L1) is set to be not lower than 0.50, a necessary ground-contact area in an equatorial plane portion of the tire 2 is ensured. Consequently, the tire 2 can exert high grip force. Thus, favorable steering stability is obtained in the tire 2. From this viewpoint, the ratio (L3/L1) is more preferably not lower than 0.55.

Meanwhile, if the ratio (L3/L1) is set to be not higher than 0.70, the reinforcing layer 18 effectively increases the rigidity of the portion, of the tread surface T, at and around the reference ground-contact end PE. Consequently, buckling is prevented from occurring, and thus a sufficient ground-contact area is ensured. Therefore, the tire 2 can exert high grip force, whereby favorable steering stability is obtained. Local increase of the ground-contact pressure is also prevented, and thus uneven wear is inhibited from occurring. Therefore, favorable wear resistance is obtained in the tire 2. From this viewpoint, the ratio (L3/L1) is more preferably not higher than 0.65.

In the tire 2, the ratio (L2/L1) of the axial distance L2 from the equatorial plane to the outer end 40 of the reinforcing layer 18 to the axial distance L 1 from the equatorial plane to the first end TE1 of the tread 4, is preferably not lower than 0.85. Accordingly, the reinforcing layer 18 effectively increases the rigidity of the portion, of the tread surface T, at and around the reference ground-contact end PE. Consequently, buckling is prevented from occurring, and thus a sufficient ground-contact area is ensured. Therefore, the tire 2 can exert high grip force, whereby favorable steering stability is obtained. Local increase of the ground-contact pressure is also prevented, and thus uneven wear is inhibited from occurring. Therefore, favorable wear resistance is obtained in the tire 2. From this viewpoint, the ratio (L2/L1) is more preferably not lower than 0.90. An upper limit of the ratio (L2/L1) is appropriately determined in consideration of, for example, influence on the mass of the tire 2.

In FIG. 4, the angle denoted by the reference character β is the angle (hereinafter, tilt angle) of each reinforcing cord 34 included in the reinforcing layer 18 with respect to the equatorial plane. The tilt angle β is expressed as the angle of an extension line of the reinforcing cord 34 with respect to the equatorial plane.

In FIG. 4, the angle denoted by the reference character γ is the angle (hereinafter, intersection angle) between the reinforcing cord 34 and each carcass cord 30 included in the carcass ply 24 on which the reinforcing layer 18 is stacked. In the tire 2, the reinforcing layer 18 is stacked on the second ply 28. The intersection angle γ is expressed as the angle between the reinforcing cord 34 and the carcass cord 30 included in the second ply 28. The intersection angle γ may be expressed as the absolute value of a difference (β-α2) between the tilt angle β of the reinforcing cord 34 and the tilt angle α2 of the carcass cord 30 included in the second ply 28.

In the tire 2, the intersection angle γ is preferably not larger than 10 degrees. Accordingly, holding force to be exerted by the reinforcing layer 18 is prevented from excessively increasing. Thus, deformation of the tire 2 due to holding of another element by the reinforcing layer 18 is prevented during production of the tire 2. Therefore, a tire 2 having an appropriate shape is obtained, whereby the tread 4 can sufficiently exhibit functions thereof.

In the tire 2, it is preferable that the tilt angle β of the reinforcing cord is larger than the tilt angle α2 of the carcass cord 30 included in the second ply 28 as the carcass ply 24 on which the reinforcing layer 18 is stacked. Accordingly, the reinforcing layer 18 effectively increases the rigidity of the portion, of the tread surface T, at and around the reference ground-contact end PE. Consequently, buckling is prevented from occurring, and thus a sufficient ground-contact area is ensured. Therefore, the tire 2 can exert high grip force, whereby favorable steering stability is obtained. Local increase of the ground-contact pressure is also prevented, and thus uneven wear is inhibited from occurring. Therefore, favorable wear resistance is obtained in the tire 2. From this viewpoint, the difference (β-α2) between the tilt angle β of the reinforcing cord 34 and the tilt angle α2 of the carcass cord 30 included in the second ply 28 is preferably not smaller than 1 degree and more preferably not smaller than 3 degrees. Meanwhile, from the viewpoint of obtaining a tire 2 having an appropriate shape and enabling the tread 4 to sufficiently exhibit functions thereof, the difference (β-α2) is preferably not larger than 9 degrees, more preferably not larger than 7 degrees, and further preferably not larger than 5 degrees.

As described above, the present invention leads to obtainment of a tire for karts that can achieve increase of the turning speed thereof.

### EXAMPLES

Hereinafter, the present invention will be described in further detail by means of examples, etc., but the present invention is not limited to these examples.

### [Example 1]

A set of tires for karts were obtained. The set was composed of front tires and rear tires. Each tire had the basic configuration shown in FIG. 1, and was made according to the specifications indicated in Table 1 presented below. The size of each front tire was "10×4.50-5". The size of each rear tire was "11×7.10-5".

In Example 1, the tilt angle α1 of each carcass cord included in the first ply was 32 degrees. The tilt angle α2 of each carcass cord included in the second ply was 32 degrees. The orientation of the tilt of the carcass cord included in the first ply was opposite to the orientation of the tilt of the carcass cord included in the second ply.

In Example 1, the reinforcing layer was stacked on the outer side of the second ply. This is indicated as "Outer" in the row "Position" in Table 1 presented below. The tilt angle β of the reinforcing cord was 35 degrees. The angle between the reinforcing cord and the carcass cord included in the second ply, i.e., the intersection angle γ, was 3 degrees.

In Example 1, the ratio (L3/L1) of the axial distance L3 from the equatorial plane to the inner end of the reinforcing layer to the axial distance L1 from the equatorial plane to the first end TE1 of the tread, was 0.60. The ratio (L2/L1) of the axial distance L2 from the equatorial plane to the outer end of the reinforcing layer to the axial distance L1, was 0.90. The ratio of the axial distance from the equatorial plane to the reference ground-contact end PE to the axial distance L1, was 0.80.

### [Comparative Example 1]

A set of tires in Comparative Example 1 was obtained in the same manner as in Example 1, except that no reinforcing layer was provided.

### [Examples 2 and 3]

Sets of tires in Examples 2 and 3 were obtained in the same manner as in Example 1, except that the axial distance L3 was changed so that the ratio (L3/L1) took the value indicated in Table 1 presented below.

### [Example 4]

A set of tires in Example 4 was obtained in the same manner as in Example 1, except that the axial distance L2 was changed so that the ratio (L2/L1) took the value indicated in Table 1 presented below.

### [Comparative Example 2]

A set of tires in Comparative Example 2 was obtained in the same manner as in Example 1, except that the reinforcing layer was provided between the first ply and the second ply.

### [Reference Example 1]

The same set of tires as the set of tires in Example 1 was prepared.

### [Mounting of Tires Produced as Samples]

The front tires were mounted to rims (size=4.5×5.0) and filled with air such that the internal pressures of the tires were adjusted to 80 Pa. These front tires were mounted to front wheels of test vehicles (racing kart vehicles each having an engine displacement of 125 cc).

The rear tires were mounted to rims (size=8.0×5.0) and filled with air such that the internal pressures of the tires were adjusted to 80 Pa. The rear tires were mounted to rear wheels of the test vehicles.

The tires in each of Examples 1 to 4 and Comparative Example 2 were mounted to a corresponding one of the test vehicles such that the first ends TE1 of the treads of the tires were located on the outer sides in the width direction of the vehicle. This is indicated as "Outer" in the row "Arrangement" in Table 1 presented below. The tires in Reference Example 1 were mounted to a corresponding one of the test vehicles such that the second ends TE2 of the treads of the tires were located on the outer sides in the width direction of the vehicle. This is indicated as "Inner" in the row "Arrangement" in Table 1.

### [Lap Time]

A driver performed a running test by causing each of the aforementioned test vehicles to run 10 laps on a 1300-m dedicated course for racing karts. In the running test, lap times were measured, and the fastest lap thereamong was obtained. The difference between the fastest lap in each example and the fastest lap in Comparative Example 1 was calculated. The result of the calculation is indicated in Table 1 presented below. A smaller numerical value indicates a shorter lap time.

### [Steering Stability]

In the aforementioned running test regarding lap time, the driver made evaluation (sensory evaluation) of steering stability. The result of the evaluation is indicated as an index in Table 1 presented below. A larger numerical value indicates a better steering stability.

### [Wear Resistance]

The driver caused the aforementioned test vehicle to run 30 laps on the aforementioned dedicated course. After the running, the amount of wear was measured on the basis of a wear indicator provided to a tire. The result of the measurement is indicated as an index in Table 1 presented below. A larger numerical value indicates a better wear resistance.

**[Table 1]**

| | Comp. Ex. 1 | Ex. 2 | Ex. 1 | Ex. 3 | Ex. 4 | Ref. Ex. 1 | Comp. Ex. 2 |
|---|---|---|---|---|---|---|---|
| α1 [degree] | 32 | 32 | 32 | 32 | 32 | 32 | 32 |
| α2 [degree] | 32 | 32 | 32 | 32 | 32 | 32 | 32 |
| L3/L1 [-] | - | 0.45 | 0.60 | 0.75 | 0.60 | 0.60 | 0.60 |
| L2/L1 [-] | - | 0.90 | 0.90 | 0.90 | 0.70 | 0.90 | 0.90 |
| β [degree] | - | 35 | 35 | 35 | 35 | 35 | 35 |
| γ [degree] | - | 3 | 3 | 3 | 3 | 3 | 3 |
| Position | - | Outer | Outer | Outer | Outer | Outer | Interposed |
| Arrangement | - | Outer | Outer | Outer | Outer | Inner | Outer |
| LAP [second] | - | -0.2 | -0.3 | -0.1 | -0.2 | 0.2 | 0.0 |
| Steering stability | 100 | 103 | 105 | 102 | 103 | 98 | 101 |
| Wear resistance | 100 | 105 | 105 | 103 | 102 | 95 | 101 |

As shown in Table 1, each example achieved improvement in the steering stability and shortening of the lap time. It is obvious that increase of the turning speed was realized. Further, the wear resistance was also improved in the examples. From this evaluation result as well, it is obvious that the present invention is superior.

### INDUSTRIAL APPLICABILITY

The above-described technology for achieving increase of the turning speed is applicable also to various types of tires.

## Claims

1. A tire (2) for karts, the tire (2) comprising:
a tread (4) configured to come into contact with a road surface;
a carcass (10) having a bias structure and located radially inward of the tread (4); and
a reinforcing layer (18) located radially inward of the tread (4) and stacked on a radially outer side of the carcass (10), wherein
a ground-contact surface obtained by bringing the tire (2) into contact with a planar road surface with a maximum load from an actual vehicle being applied to the tire (2) in a state where the tire (2) is mounted to a normal rim, an internal pressure of the tire (2) is adjusted to a normal internal pressure, and a camber angle of the tire (2) is set to 0 degrees, is a reference ground-contact surface,
a position, on an outer surface of the tread (4), that corresponds to an axially outer end of the reference ground-contact surface is a reference ground-contact end (PE),
out of both ends (TE) of the tread (4), an end located on one side in an axial direction is a first end (TE1), and an end located on another side in the axial direction is a second end (TE2),
the reinforcing layer (18) is located between an equatorial plane (CL) and the first end (TE1) of the tread (4),
an inner end (38) of the reinforcing layer (18) is located axially inward of the reference ground-contact end (PE), and
the reinforcing layer (18) includes a large number of reinforcing cords (34) aligned in a circumferential direction,
the carcass (10) includes at least two carcass plies (24),
each carcass ply (24) includes a large number of aligned carcass cords (30), **characterized in that**
an angle (γ) between each reinforcing cord (34) and each carcass cord (30) included in the carcass ply (24) on which the reinforcing layer (18) is stacked, is not larger than 10 degrees.

2. The tire (2) for karts according to claim 1, wherein
a ratio (L3/L1) of an axial distance (L3) from the equatorial plane (CL) to the inner end (38) of the reinforcing layer (18) to an axial distance (L1) from the equatorial plane (CL) to the first end (TE1) of the tread (4), is not lower than 0.50 and not higher than 0.70.

3. The tire (2) for karts according to claim 1 or 2, wherein
a ratio (L2/L1) of an axial distance (L2) from the equatorial plane (CL) to an outer end (40) of the reinforcing layer (18) to the axial distance (L1) from the equatorial plane (CL) to the first end (TE1) of the tread (4), is not lower than 0.85.

4. The tire (2) for karts according to any one of claims 1 to 3, wherein an angle (β) of the reinforcing cord (34) with respect to the equatorial plane (CL) is larger than an angle (α2) of the carcass cord (30) with respect to the equatorial plane (CL).

5. The tire (2) for karts according to any one of claims 1 to 4, wherein when the tire (2) is mounted to a vehicle, the first end (TE1) of the tread (4) is located on an outer side in a width direction of the vehicle.

## Patentansprüche

1. Reifen (2) für Karts, wobei der Reifen (2) umfasst:
eine Lauffläche (4), die ausgebildet ist, um mit einer Straßenoberfläche in Kontakt zu gelangen;
eine Karkasse (10), die eine Neigungsstruktur aufweist und radial innerhalb der Lauffläche (4) angeordnet ist; und
eine Verstärkungslage (18), die radial innerhalb der Lauffläche (4) angeordnet ist und auf einer radial äußeren Seite der Karkasse (10) aufgestapelt ist, wobei
eine Bodenkontaktfläche, die dadurch erhalten wird, dass der Reifen (2) mit einer ebenen Straßenoberfläche in Kontakt gebracht wird, wobei eine maximale Last eines tatsächlichen Fahrzeugs auf den Reifen (2) in einem Zustand ausgeübt wird, in welchem der Reifen (2) an einer Normalfelge montiert ist, ein Innendruck des Reifens (2) auf einen normalen Innendruck eingestellt ist und ein Sturzwinkel des Reifens (2) auf 0 Grad festgelegt ist, eine Referenz-Bodenkontaktfläche ist,
eine Position an einer äußeren Oberfläche der Lauffläche (4), welche einem axial äußeren Ende der Referenz-Bodenkontaktfläche entspricht, ein Referenz-Bodenkontaktende (PE) ist,
von beiden Enden (TE) der Lauffläche (4) ein Ende, das in einer Axialrichtung auf einer Seite angeordnet ist, ein erstes Ende (TE1) ist und ein Ende, das in der Axialrichtung auf der anderen Seite angeordnet ist, ein zweites Ende (TE2) ist,
die Verstärkungslage (18) zwischen einer Äquatorialebene (CL) und dem ersten Ende (TE1) der Lauffläche (4) angeordnet ist,
ein inneres Ende (38) der Verstärkungslage (18) axial innerhalb des Referenz-Bodenkontaktendes (PE) angeordnet ist und
die Verstärkungslage (18) eine große Anzahl von Verstärkungskorden (34) aufweist, die in einer Umfangsrichtung ausgerichtet sind,
die Karkasse (10) zumindest zwei Karkassenschichten (24) aufweist,
jede Karkassenschicht (24) eine große Anzahl von ausgerichteten Karkassenkorden (30) aufweist,
**dadurch gekennzeichnet, dass**
ein Winkel (γ) zwischen jedem Verstärkungskord (34) und jedem Karkassenkord (30), der in die Karkassenschicht (24) eingebunden ist, auf welche die Verstärkungslage (18) aufgestapelt ist, nicht größer als 10 Grad ist.

2. Reifen (2) für Karts nach Anspruch 1, wobei
ein Verhältnis (L3/L1) einer axialen Distanz (L3) von der Äquatorialebene (CL) bis zu dem inneren Ende (38) der Verstärkungslage (18) zu einer axialen Distanz (L1) von der Äquatorialebene (CL) bis zu dem ersten Ende (TE1) der Lauffläche (4) nicht kleiner als 0,50 und nicht größer als 0,70 ist.

3. Reifen (2) für Karts nach Anspruch 1 oder 2, wobei
ein Verhältnis (L2/L1) einer axialen Distanz (L2) von der Äquatorialebene (CL) bis zu einem äußeren Ende (40) der Verstärkungslage (18) zu der axialen Distanz (L1) von der Äquatorialebene (CL) bis zu dem ersten Ende (TE1) der Lauffläche (4) nicht kleiner als 0,85 ist.

4. Reifen (2) für Karts nach einem der Ansprüche 1 bis 3, wobei
ein Winkel (β) des Verstärkungskords (34) bezogen auf die Äquatorialebene (CL) größer als ein Winkel (α2) des Karkassenkords (30) bezogen auf die Äquatorialebene (CL) ist.

5. Reifen (2) für Karts nach einem der Ansprüche 1 bis 4, wobei
dann, wenn der Reifen (2) an einem Fahrzeug montiert ist, das erste Ende (TE1) der Lauffläche (4) auf einer Außenseite in einer Breitenrichtung des Fahrzeugs angeordnet ist.

## Revendications

1. Pneumatique (2) pour karts, le pneumatique (2) comprenant :
une bande de roulement (4) configurée pour venir en contact avec une surface routière ;
une carcasse (10) ayant une structure diagonale et située radialement à l'intérieur de la bande de roulement (4) ; et
une couche de renforcement (18) située radialement à l'intérieur de la bande de roulement (4) et empilée sur un côté radialement extérieur de la carcasse (10), dans lequel
une surface de contact au sol, obtenue en amenant le pneumatique (2) en contact avec une surface routière planaire avec une charge maximum provenant d'un véhicule réel qui est appliquée sur le pneumatique (2) dans un état où le pneumatique (2) est monté sur une jante normale, où une pression interne du pneumatique (2) est ajustée à une pression interne normale, et où un angle de cambrure du pneumatique (2) est fixé à 0 degré, est une surface de contact au sol de référence,
une position, sur une surface extérieure de la bande de roulement (4), qui correspond à une extrémité axialement extérieure de la surface de contact au sol de référence, est une extrémité de contact au sol de référence (PE), parmi les deux extrémités (TE) de la bande de roulement (4), une extrémité située sur un côté dans une direction axiale est une première extrémité (TE1), et une extrémité située sur un autre côté dans la direction axiale est une seconde extrémité (TE2),
la couche de renforcement (18) est située entre un plan d'équateur (CL) et la première extrémité (TE1) de la bande de roulement (4),
une extrémité intérieure (38) de la couche de renforcement (18) est située axialement à l'intérieur de l'extrémité de contact au sol de référence (PE), et la couche de renforcement (18) inclut un grand nombre de câblés de renforcement (34) alignés dans une direction circonférentielle,
la carcasse (10) inclut au moins deux nappes de carcasse (24),
chaque nappe de carcasse (24) inclut un grand nombre de câblés de carcasse (30) alignés,
**caractérisé en ce que**
un angle (γ) entre chaque câblé de renforcement (34) et chaque câblé de carcasse (30) inclus dans la nappe de carcasse (24) sur laquelle la couche de renforcement (18) est empilée, n'est pas supérieur à 10° degrés.

2. Pneumatique (2) pour karts selon la revendication 1, dans lequel un rapport (L3/L1) d'une distance axiale (L3) depuis le plan d'équateur (CL) jusqu'à l'extrémité intérieure (38) de la couche de renforcement (18) sur une distance axiale (L1) depuis le plan d'équateur (CL) jusqu'à la première extrémité (TE1) de la bande de roulement (4) n'est pas inférieur à 0,50 et n'est pas supérieur à 0,70.

3. Pneumatique (2) pour karts selon la revendication 1 ou 2, dans lequel un rapport (L2/L1) d'une distance axiale (L2) depuis le plan d'équateur (CL) jusqu'à une extrémité extérieure (40) de la couche de renforcement (18) sur une distance axiale (L1) depuis le plan d'équateur (CL) jusqu'à la première extrémité (TE1) de la bande de roulement (4) n'est pas inférieur à 0,85.

4. Pneumatique (2) pour karts selon l'une quelconque des revendications 1 à 3,dans lequel
un angle (β) du câblé de renforcement (34) par rapport au plan d'équateur (CL) est plus grand qu'un angle (α2) du câblé de carcasse (30) par rapport au plan d'équateur (CL).

5. Pneumatique (2) pour karts selon l'une quelconque des revendications 1 à 4,dans lequel
quand le pneumatique (2) est monté sur un véhicule, la première extrémité (TE1) de la bande de roulement (4) est située sur un côté extérieur dans une direction de la largeur du véhicule.
